Europäisches Patentamt

European Patent Office

Office européen des brevets

(19)

(11) Numéro de publication: **0 187 103**
**B1**

(12) **FASCICULE DE BREVET EUROPEEN**

(45) Date de publication du fascicule du brevet:
21.02.90

(51) Int. Cl.⁵: **G 10 K 11/00,** G 01 V 1/38

(21) Numéro de dépôt: **85402644.0**

(22) Date de dépôt: **27.12.85**

(54) **Flute marine verticale.**

(30) Priorité: **28.12.84 FR 8420060**

(43) Date de publication de la demande:
**09.07.86 Bulletin 86/28**

(45) Mention de la délivrance du brevet:
**21.02.90 Bulletin 90/8**

(84) Etats contractants désignés:
**BE DE GB IT NL**

(56) Documents cités:
**GB-A- 1 570 135**
**US-A- 3 105 453**
**US-A- 3 375 488**
**US-A- 4 405 036**

**IEEE TRANSACTIONS ON GEOSCIENCE
ELECTRONICS, vol. GE-7, no. 4, octobre 1969, pages
226-234, New York, US; H. WAUGH Jr.: "A buoy
supported acoustical data acquisition system"**

(73) Titulaire: **INSTITUT FRANCAIS DU PETROLE, 4, Avenue
de Bois-Préau, F-92502 Rueil-Malmaison (FR)**

(72) Inventeur: **Magneville, Pierre, 43, rue Eugène Bourdillon,
F-78540 Vernouillet (FR)**

## Description

La présente invention a pour objet un dispositif de réception d'ondes acoustiques dans l'eau et plus particulièrement un dispositif de réception comportant une pluralité de récepteurs disposés en opération à des niveaux de profondeurs différents.

Le dispositif selon l'invention trouve ses applications dans les domaines de l'océanographie, de la détection acoustique ou encore de la prospection sismique en mer, par exemple.

Dans le domaine de l'océanographie, il est connu d'utiliser des bouées-radio comportant un corps flottant associé à un équipement radio-émetteur relié à un ou plusieurs capteurs immergés tels que des hydrophones. Les capteurs sont supportés soit par un câble lesté, soit par un tube ou une colonne, lequel est adapté à se maintenir dans une position sensiblement verticale et est le plus souvent ancré au fond de l'eau. De telles bouées sont décrites par exemple dans les brevets US 3 405 558, 3 488 783 ou 3 541 498.

Certaines opérations de prospection sismique, par réfraction par exemple, comportent l'utilisation d'une bouée-radio à laquelle est suspendu un capteur tel qu'un hydrophone, adapté à détecter les ondes acoustiques réfractées par les différentes couches du sous-sol, en réponse à des impulsions sismiques émises par une source marine remorquée derrière un navire. La bouée est mise à l'eau et le navire s'en éloigne. La source sismique qu'il entraîne est actionné périodiquement. Les ondes captées sont transmises par radio à un laboratoire d'enregistrement installé sur le navire.

Une bouée de ce type est décrite par exemple dans le brevet US 3 671 928.

L'utilisation d'une ou plusieurs bouées-radio libres laissées derrière un navire sismique présente de nombreux inconvénients.

En raison des courants éventuels, il est parfois difficile de déterminer leurs positions exactes aux instants successifs où la source sismique est déclenchée. Il est aussi difficile souvent de les repérer, une fois achevées les opérations de prospection sismique et lorsque cela est possible, leur récupération nécessite des manoeuvres parfois longues.

Dans de nombreux cas, on préfère utiliser des bouées-radio à une seule voie de transmission et pourvues d'un équipement électronique assez sommaire et peu onéreux et qui de ce fait, peuvent être abandonnées à la fin des opérations de relevés si les circonstances ne se prêtent pas à leur récupération.

En outre, les bouées-radio non ancrées sont livrées aux mouvements de la houle et les éléments capteurs suspendus au-dessous sont soumis à des déplacements verticaux générateurs de bruit de fond. Les moyens amortisseurs que l'on trouve souvent associés au câble supportant les éléments capteurs n'ont qu'un pouvoir limité et contribuent à rendre plus complexes les bouées-radio et plus difficile leur mise à l'eau.

Un autre inconvénient des bouées-radio lié au précédent, tient à leur encombrement surtout lorsqu'elles comportent une pluralité de capteurs espacés, fixés à une partie immergée relativement longue. Le déplacement d'une telle bouée d'un emplacement à un autre est difficile du fait qu'il est souvent nécessaire de la hisser entièrement hors de l'eau.

Le dispositif selon l'invention permet d'éviter les inconvénients ci-dessus mentionnés.

Il comporte un élément tubulaire ou flûte dont la longueur est grande relativement à sa section et des éléments de lestage de l'élément tubulaire disposés du côté d'une première extrémité de celui-ci. Il est caractérisé en ce qu'il comporte une pluralité de récepteurs d'ondes acoustiques répartis à l'intérieur de l'élément tubulaire, lequel contient des moyens de flottaison du côté de sa seconde extrémité, la répartition des masses étant telle que l'élément tubulaire flotte verticalement dans l'eau en position d'équilibre statique. Le dispositif comporte en outre des ailerons de stabilisation profilés fixés au voisinage de la première extrémité de l'élément tubulaire, leur disposition et leur surface étant choisies pour assurer l'équilibrage dynamique dudit élément tubulaire en position sensiblement horizontale, lorsqu'il est remorqué par un navire.

Suivant un mode de réalisation, le dispositif comporte également un câble de liaison avec un véhicule de surface, le câble comportant des conducteurs électriques reliant les différents récepteurs à des moyens d'enregistrement disposés sur le véhicule.

Suivant un mode de réalisation particulier, le dispositif comporte également un élément de mesure de la profondeur d'immersion qui est fixé au câble de liaison, ledit élément de mesure étant connecté par l'intermédiaire de conducteurs électriques du câble avec un système de pilotage adapté à maintenir un certain écart de préférence sensiblement constant entre ledit véhicule et l'élément tubulaire lorsque celui-ci est disposé suivant la verticale en position d'équilibre stable dans l'eau.

La disposition des différents récepteurs et des fils conducteurs associés à l'intérieur facilite la réalisation d'un élément allongé bien lisse qui, du fait de sa longueur notamment, est très peu sensible aux oscillations de la houle. Par conséquent, le bruit de fond d'origine hydrodynamique qui se superpose aux signaux reçus par les récepteurs est très faible.

En outre, la répartition des masses et la présence des ailerons de sustentation permettent de remorquer sans difficulté le dispositif d'un emplacement de mesure à un autre et de le positionner rapidement à la verticale, ce qui est très utile pour de nombreuses applications notamment pour des opérations de prospection sismique, comme on le verra plus en détail dans la suite de la description qui est relative à un mode de réalisation particulier donné à titre d'exemple non limitatif et en se reportant aux dessins annexés où:

la figure 1 représente schématiquement l'élément tubulaire en position stable, à la verticale dans l'eau,

la figure 2 représente schématiquement une section de l'élément tubulaire où sont disposés des ensembles d'hydrophones,

la figure 3 représente schématiquement les moyens de raccordement de deux sections de l'élément tubulaire, et

la figure 4 représente l'élément tubulaire en position couchée dans l'eau lorsqu'il est tracté par un véhicule de surface.

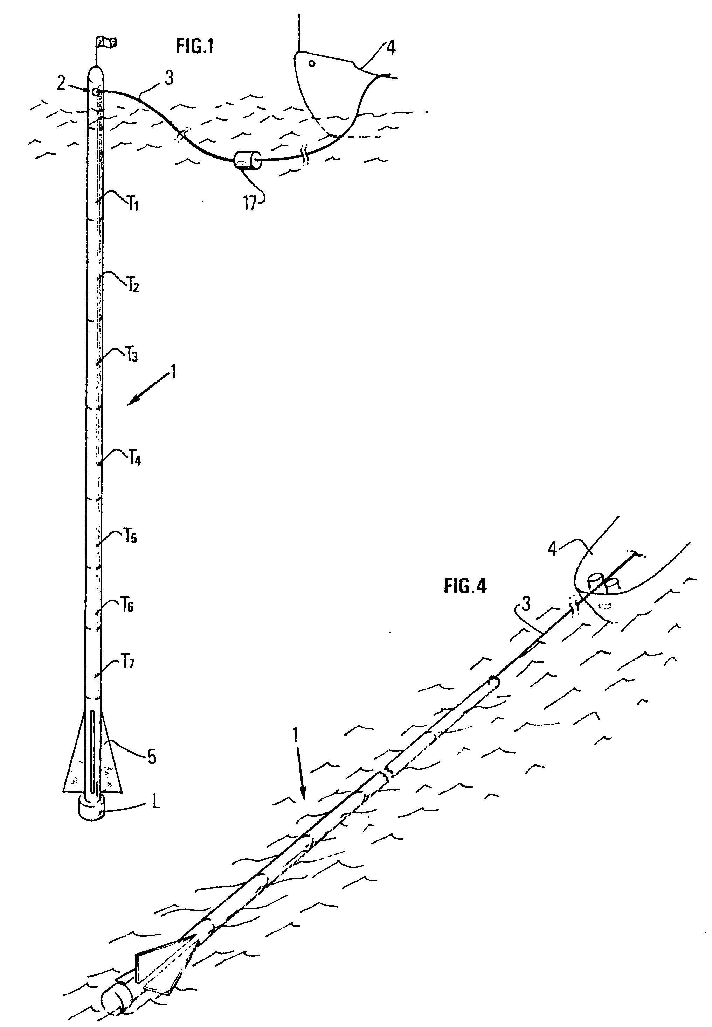

Le dispositif selon l'invention comporte (Fig. 1) un élément tubulaire ou flûte 1 réalisé en un matériau plastique transparent aux ondes acoustiques. L'élément tubulaire est pourvu au voisinage d'une première extrémité, de moyens 2 de fixation à un câble 3, lequel est relié à un bateau tracteur 4. Un lest L est fixé à son extrémité opposée. Au voisinage de celle-ci sont fixés également des ailerons stabilisateurs profilés 5.

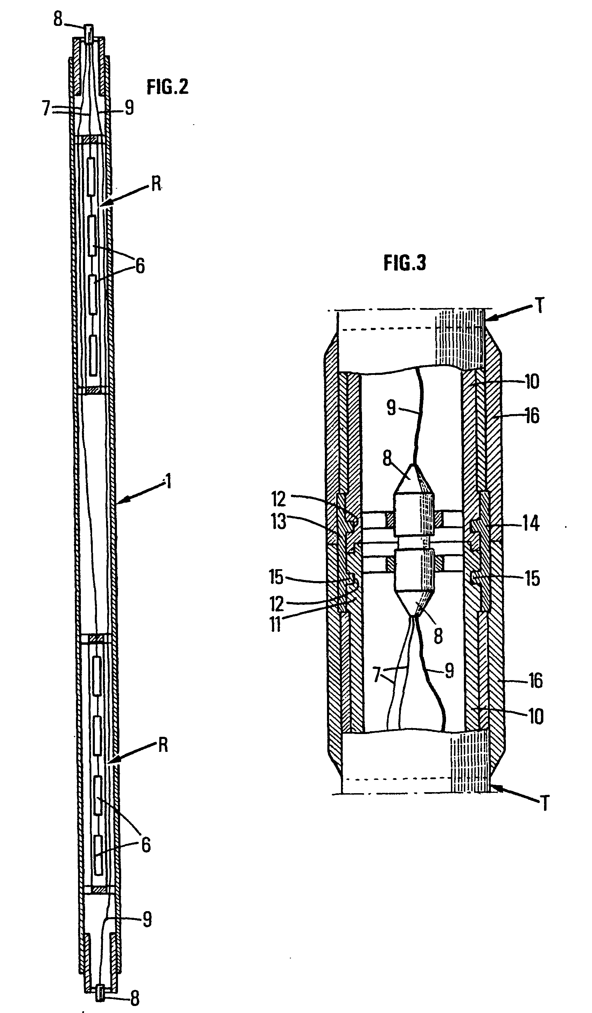

L'élément tubulaire 1 comporte par exemple six sections $T_1$, $T_2$...$T_6$ interconnectées. Les trois sections $T_1$, $T_2$, $T_3$ les plus proches de la première extrémité contiennent des flotteurs (non représentés). Les trois sections opposées $T_4$, $T_5$, $T_6$ contiennent des récepteurs acoustiques R. Chacun d'eux comporte (Fig. 2) un tube à l'intérieur duquel sont disposés une pluralité d'hydrophones 6 interconnectés électriquement par des conducteurs 7. Suivant un mode de réalisation particulier, chaque section active de l'élément tubulaire 1 peut comporter deux récepteurs R constitués chacun par l'interconnexion de six à douze hydrophones.

Un connecteur électrique 8 est fixé aux extrémités opposées de chaque section. Un câble multi-conducteurs 9 est disposé à l'intérieur de chacune d'elles. Ses différents conducteurs interconnectent une partie au moins des broches des deux connecteurs d'extrémité 8. Dans chacune des sections actives $T_4$ à $T_6$, les conducteurs électriques 7 associés aux différents récepteurs R sont reliés à l'une des extrémités à un connecteur 8. Leur connexion aux différents conducteurs ou lignes du câble multi-conducteurs 9 s'effectue dans ledit connecteur.

La densité des sections actives est supérieure à celle de l'eau.

Un embout tubulaire 10 est introduit à force à l'intérieur des parties terminales de chaque section T de l'élément tubulaire 1 (Fig. 3). Chaque embout comporte une tête 11 de diamètre plus grand que celui de chaque section et pourvue d'une rainure circulaire 12.

L'interconnexion des embouts de deux sections T consécutives de l'élément tubulaire 1 est effectuée au moyen de deux demi-coquilles 13, 14 pourvues sur leur face intérieure de deux cannelures 15. Les deux demi-coquilles 13, 14 sont rapprochées l'une de l'autre de manière à enserrer les têtes des deux embouts, les cannelures 15 venant s'emboîter dans les rainures 12. Elles sont maintenues en place par deux manchons 16 pouvant coulisser à l'extérieur des deux sections T et que l'on rapproche l'un de l'autre au moment du montage jusqu'à ce qu'ils recouvrent complètement les pièces emboîtées.

La forme et la section des manchons sont choisies de manière à minimiser les bruits hydrodynamiques.

Les connecteurs électriques 8 sont disposés à l'intérieur des embouts 10. Lorsque l'on effectue le raccordement de deux sections consécutives, on interconnecte les broches des connecteurs électriques d'extrémité avant de procéder au montage des coquilles 13, 14 et à leur recouvrement par les manchons 16.

Le câble multi-conducteurs 9 s'étent sur tout le long de l'élément tubulaire et, à la première extrémité de celui-ci, est raccordé à des conducteurs électriques contenus dans le câble de remorquage 3. Les signaux recueillis par les différents récepteurs R peuvent être transmis par ce moyen à un système de mémorisation ou d'enregistrement installé sur le bateau et non représenté et éventuellement être transmis directement à une station d'enregistrement.

La répartition des masses entre les différentes sections $T_1$ à $T_6$ et la présence du lest L (Fig. 1) font que, lorsque le bateau tracteur s'arrête, l'élément tubulaire se redresse à la verticale et se trouve presque entièrement immergé. La forme et les dimensions des ailerons 5 sont calculées pour que les forces de remorquage créent une force hydrodynamique importante qui soulève la partie arrière du dispositif et la stabilise en rotation lorsque le bateau tracteur avance (Fig. 4). La forme profilée donnée au corps tubulaire lui assure une très faible trainée hydrodynamique.

L'élément tubulaire est choisi suffisamment long pour que ses déplacements sous l'effet de la houle soient négligeables lorsqu'il se trouve en position stationnaire à la verticale. Sa longueur peut varier de quelques dizaines de mètres à plusieurs centaines de mètres suivant le nombre de sections qui le constituent.

La mise en opération du dispositif est très simplifiée. Le bateau tracteur remorque l'élément tubulaire (Fig. 4) jusqu'à un emplacement choisi pour son utilisation et s'y arrête. Lorsque le câble de traction 3 est suffisamment détendu, l'élément tubulaire se redresse complètement jusqu'à la verticale (Fig. 1) et se stabilise.

Des mesures peuvent être alors effectuées à différents niveaux de profondeur par les récepteurs R. Il peut s'agir par exemple de la détection de signaux réfractés dans le cadre d'opérations de prospection sismique.

Une tension inopportune du câble risquant d'incliner ou de coucher l'élément tubulaire alors qu'il se trouve à la verticale et que des mesures acoustiques sont effectuées, si le bateau est déplacé par le vent, les courants ou bien la houle, le dispositif comporte avantageusement des moyens de stabilisation des écarts. Ces moyens comportent un capteur de profondeur lesté 17 (Fig. 1) fixé au câble 3 à mi-longueur, qui mesure la profondeur d'immersion de celui-ci dans sa partie la plus basse. Le capteur 17 est connecté à une ligne du câble 3 et le signal qu'il engendre est transmis à un système de pilotage (non représenté à bord du bateau. En fonction de ce signal, le système de pilotage agit sur les moyens propulseurs et éventuellement sur la barre, pour que la profondeur d'immersion du capteur soit maintenue au voisinage d'une valeur déterminée.

Le véhicule remorqueur peut être de faible tonnage. On peut utiliser avantageusement une vedette télécommandée, analogue à celle décrite dans la demande de brevet français EN 84/18 590 par exemple et dont les évolutions sont commandées depuis un navire principal pourvu d'un système de télédétection et de télécommande par radio.

Pour certaines applications, le navire se déplace d'un mouvement uniforme, tractant une source sismique qui est actionnée périodiquement. La vedette reçoit par radio l'ordre de déplacer le dispositif de réception d'un emplacement à un autre d'une succession d'emplacements déterminés et d'y stationner un temps suffisant pour capter des échos sur les couches souterraines des impulsions sismiques émises par la source.

Les moyens de propulsions de la vedette sont par exemple du type à hydrojets.

Dans ce cas, le système de pilotage de la vedette agit en fonction du signal délivré par le capteur de profondeur 17 (Fig. 1) pour commander le régime de rotation de la turbine et l'orientation des tuyères d'éjection de l'eau par rapport au véhicule.

Si le bateau est une vedette du type décrit dans la demande de brevet précitée, les signaux captés par les différents récepteurs R du dispositif sont transmis par le câble de liaison 3 à un système de transmission par radio et envoyés à un laboratoire d'enregistrement installé sur le navire principal.

## Revendications

1. Dispositif de réception d'ondes acoustiques dans l'eau comportant un élément tubulaire (1) dont la longueur est grande relativement à sa section et des éléments de lestage (L) de l'élément tubulaire disposés du côté d'une première extrémité de celui-ci, caractérisé en ce qu'il comporte une pluralité de récepteurs d'ondes acoustiques (R) répartis à l'intérieur de l'élément tubulaire, lequel contient des moyens de flottaison du côté de sa seconde extrémité, la répartition des masses étant telle que l'élément tubulaire flotte verticalement dans l'eau en position d'équilibre statique, le dispositif comportant en outre des ailerons de stabilisation profilés (5) fixés au voisinage de la première extrémité de l'élément tubulaire, leur disposition et leur surface étant choisies pour assurer l'équilibrage dynamique dudit élément tubulaire en position sensiblement horizontale, lorsqu'il est remorqué par un véhicule (4).

2. Dispositif de réception selon la revendication 1, caractérisé en ce qu'il comporte un câble de liaison (3) avec le véhicule (4), le câble comportant des conducteurs électriques (7) reliant les différents récepteurs (R) à des moyens d'enregistrement disposés sur ledit véhicule.

3. Dispositif selon la revendication 2, caractérisé en ce qu'il comporte un élément de mesure (17) de la profondeur d'immersion qui est fixé au câble, ledit élément de mesure étant connecté par l'intermédiaire de conducteurs électriques du câble, à un système de pilotage adapté à maintenir le véhicule à une certaine distance de l'élément tubulaire, lorsque celui-ci est orienté suivant la verticale, en position d'équilibre stable dans l'eau.

4. Dispositif selon l'une des revendications précédentes, caractérisé en ce que l'élément allongé comporte une pluralité de sections interconnectées, certaines sections ($T_1$ à $T_3$), du côté de la première extrémité, contenant des éléments flottants et en ce que les différents récepteurs (R) sont répartis dans plusieurs sections ($T_4$ à $T_6$) de l'élément allongé du côté de la seconde extrémité de celui-ci, lesquelles sections ont une densité supérieure à celle de l'eau.

5. Dispositif selon la revendication 4, caractérisé en ce que les moyens de lestage (L) comportent des masses rapportées fixées à la seconde extrémité de l'élément allongé (1).

6. Dispositif selon la revendication 4, caractérisé en ce que les différents récepteurs (R) comportent une pluralité de capteurs (6) interconnectés, lesdits récepteurs étant connectés électriquement à un câble multi-conducteur (9) disposé à l'intérieur de l'élément allongé, ledit câble étant connecté au câble (3) reliant l'élément allongé au véhicule tracteur.

7. Dispositif selon la revendication 6, caractérisé en ce qu'il comporte des moyens d'interconnexion des différentes sections constituées d'embouts (10) pourvus de têtes (11) et assujettis aux extrémités des sections, lesdits embouts étant maintenus en position les uns par rapport aux autres par des coquilles (14, 15) coopérant avec les têtes des embouts et par les manchons extérieurs (16), et de connecteurs électriques (8) pour interconnecter les différents conducteurs électriques (7, 9) disposés à l'intérieur de chaque section.

## Patentansprüche

1. Vorrichtung zum Empfang von Schallwellen in Wasser mit einem röhrenförmigen Element (1), dessen Länge groß relativ zu seinem Querschnitt ist und mit Ballastelementen (L) für das röhrenförmige Element, die auf der Seite von einem ersten Ende hiervor angeordnet sind, dadurch gekennzeichnet, daß sie eine Vielzahl von Empfängern für Schallwellen (R) umfaßt, die im Inneren des röhrenförmigen Elements verteilt sind, das Flottationsmittel auf der Seite seines zweiten Endes enthält, wobei die Verteilung der Massen derart ist, daß das röhrenförmige Element vertikal im Wasser in statischer Gleichgewichtsstellung treibt, wobei die Vorrichtung im übrigen profilierte Stabilisationsflügel (5) umfaßt, die benachbart dem ersten Ende des röhrenförmigen Elements befestigt sind, wobei deren Anordnung und Oberfläche so gewählt sind, daß das dynamische Gleichgewicht dieses röhrenförmigen Elements in im wesentlichen horizontaler Stellung sichergestellt ist, wenn es von einem Fahrzeug (4) geschleppt wird.

2. Empfangsvorrichtung nach Anspruch 1, dadurch gekennzeichnet, daß sie ein Verbindungskabel (3) mit dem Fahrzeug (4) aufweist, wobei das Kabel elektrische Leiter (7) umfaßt, die die unterschiedlichen Empfänger (R) mit Aufzeichnungseinrichtungen verbindet, die auf dem Fahrzeug angeordnet sind.

3. Vorrichtung nach Anspruch 2, dadurch gekennzeichnet, daß sie ein Meßelement (17) für die Tauchtiefe, das am Kabel befestigt ist, umfaßt, wobei dieses Meßelement vermittels elektrischer Leiter des Kabels mit einem Hilfssteuersystem verbunden ist, das so ausgelegt ist, daß es das Fahrzeug unter einer gewissen Entfernung vom röhrenförmigen Element hält, wenn dieses entsprechend der Vertikalen in stabiler Gleichgewichtsstellung im Wasser orientiert ist.

4. Vorrichtung nach einem der vorhergehenden Ansprüche, dadurch gekennzeichnet, daß dieses längliche Element eine Vielzahl untereinander verbundener Abschnitte umfaßt, wobei gewisse Abschnitte ($T_1$ bis $T_3$) auf der Seite des ersten Endes schwimmende Elemente enthält und daß die verschiedenen Empfänger (R) in mehreren Abschnitten ($T_4$ bis $T_6$) des länglichen Elements auf der Seite des zweiten Endes hiervon verteilt sind, wobei diese Abschnitte eine Dichte größer als die des Wassers haben.

5. Vorrichtung nach Anspruch 4, dadurch gekennzeichnet, daß die Ballastmittel (L) aufgesetzte Massen umfassen, die am zweiten Ende des länglichen Elements (1) befestigt sind.

6. Vorrichtung nach Anspruch 4, dadurch gekennzeichnet, daß die verschiedenen Empfänger (R) eine Vielzahl von untereinander verbundenen Aufnehmern (6) umfassen, wobei die Aufnehmer elektrisch mit einem Mehrleiterkabel (9) verbunden sind, das im Inneren des länglichen Elements angeordnet ist, wobei dieses Kabel mit dem das längliche Element mit dem Schleppfahrzeug verbindenden Kabel (3) verbunden ist.

7. Vorrichtung nach Anspruch 6, dadurch gekennzeichnet, daß sie Verbindungseinrichtungen für die unterschiedlichen Abschnitte umfaßt, die aus Ansatzstücken (10), die mit Köpfen (11) versehen sind, bestehen und an den Enden der Abschnitte befestigt sind, wobei diese Ansatzstücke in der Lage bezüglich einander vermittels Schalen (14, 15) gehalten sind, die mit den Köpfen der Ansatzstücke und mit äußeren Muffen (16) und elektrischen Leitern (8) zusammenwirken, um die verschiedenen elektrischen im Inneren jedes Abschnitts angeordneten Leitern (7, 9) miteinander zu verbinden.

**Claims**

1. Device for the reception of sound waves in water comprising a tubular element (1) of long length relative to its cross section and devices for ballasting (L) the tubular element arranged at the side and at one end of the said tubular element, characterised in that it comprises a number of receivers for sound waves (R) distributed inside the said tubular element, this containing a device for floating located at the side and at the other end, the distribution of weights enabling the tubular element to float vertically in the water in a position of static equilibrium, the device also including profiled fins for stabilisation (5) fixed in the vicinity of the first end of the tubular element, their arrangement and their surface area being selected to dynamically balance the said tubular element in the basically horizontal position when it is towed by a vessel (4).

2. Reception device in accordance with claim 1, characterised in that it includes a cable (3) for connecting it to the vessel (4), the cable comprising electrical conductors (7) connecting the various receivers (R) to a recording device located on the said vessel.

3. Device in accordance with claim 2, characterised in that it includes a device (17) for measuring the depth of immersion and which is fixed to the cable, the said measuring device being connected by means of electrical conductors in the cable to a control system designed to maintain the vessel at a certain distance from the said tubular element when this is vertical and in a position of stable equilibrium in the water.

4. Device in accordance with one of the preceding claims, characterised in that the elongated element includes a number of interconnected sections, certain sections ($T_1$ to $T_3$), on the side at the first end, containing devices for floating and in that the various receivers (R) are distributed over several sections ($T_4$ to $T_6$) of the elongated element on the side at the second end of this element, the said sections having a density exceeding that of water.

5. Device in accordance with claim 4, characterised in that the devices used for ballasting (L) include weights fixed separately to the second end of the elongated element (1).

6. Device in accordance with claim 4, characterised in that the various receivers (R) include a number of interconnected sensors (6), the said receivers being connected electrically to a multi conductor cable (9) located inside the elongated element, the said cable being connected to the cable (3) connecting the elongated element to the towing vessel.

7. Device in accordance with claim 6, characterised in that it comprises a means of interconnecting the various sections and comprising end fittings (10) provided with heads (11) and associated with the ends of the sections, the said end fittings being held in position relative to each other by means of housings (14, 15) in conjunction with the heads of the end fittings and by external sleeves (16) and electrical connectors (8) for interconnecting the various electrical conductors (7, 9) located inside each section.

FIG.1

FIG.4

FIG.2

FIG.3